# EUROPEAN PATENT SPECIFICATION

(11) **EP 1 991 628 B1**
(45) Date of publication and mention of the grant of the patent: **08.09.2010**
(21) Application number: 07752624.2
(22) Date of filing: 06.03.2007
(51) Int. Cl.: C09D 167/00

(54) **COATINGS BASED ON FLUOROCHEMICAL AND LECITHIN ADDITIVES**
BESCHICHTUNGEN AUF DER BASIS VON FLUORCHEMISCHEN SOWIE LECITHIN-ZUSÄTZEN
REVETEMENTS CONTENANT UN PRODUIT CHIMIQUE FLUORE ET DES ADDITIFS LECITHINE

(30) Priority: 08.03.2006 US 370553; 04.04.2006 US 398154
(43) Date of publication of application: 19.11.2008
(73) Proprietor: E.I. DU PONT DE NEMOURS AND COMPANY, Wilmington, DE 19898 (US)
(72) Inventor: YEN, Jessica, Chen-Ying, Greenville, Delaware 19807 (US); BERRETTINI, Mia, Genevieve, Wilmington, Delaware 19806 (US); GAVENONIS, John, Wilmington, Delaware 19806 (US); MENG, Xianjun, Jean, Hockessin, Delaware 19707 (US); WU, Dan, Qing, West Chester, Pennsylvania 19382 (US)
(74) Representative: Matthews, Derek Peter
(86) International application number: PCT/US2007/005938
(87) International publication number: WO 2007/103505

(56) References cited:
- EP-A1- 0 033 791
- WO-A-2004/021976
- PT-A- 70 798

## Description

### FIELD OF THE INVENTION

In a non-limiting way, this invention relates to coating compositions containing lecithin additives and fluorochemicals that in combination provide durable oil-repellent dried coatings to substrates on which they are applied. This invention also relates to the dried coatings with durable improved cleanability and improved contact angles that are derived from such compositions.

### BACKGROUND OF THE INVENTION

The coating compositions of interest in the present invention are alkyd coating compositions, urethane coating compositions, water-dispersible coating compositions, and unsaturated polyester coating compositions, typically a paint, clear coating, or stain. All of the above-listed coating compositions after drying or curing often show low hexadecane contact angles, are readily wetted by oil, and are susceptible to soiling. The coating compositions are described in Outlines of Paint Technology (Halstead Press, New York, NY, Third edition, 1990) and Surface Coatings Vol. I, Raw Materials and Their Usage (Chapman and Hall, New York, NY, Second Edition, 1984).

The rheology of the above described compositions is such that the resulting cured composition is less than desirably uniform. The nonuniformity of such a cured surface causes the contact angle measurement to be low. Contact angle is known to reflect the ability of such a cured surface to be readily cleaned. Cleanability is known to be a description that can be reliably and reproducibly evaluated by testing.

It has been attempted to overcome the problem of lack of evenness and uniformity of coating by the addition of a variety of surfactants and other compounds to change the rheology of the composition. Although these additions have produced improvements in the visual appearance of the dried coating, the cleanability of such compositions remains largely unimproved. This is evidenced by the persistence of a low contact angle. The problem of cleanability has commonly been approached as a separate problem. Additives can be combined with paint compositions to improve cleanability. Such additives have been able to demonstrate cleanability as shown through higher contact angle measurements for the resulting dry coatings (U.S. Patents 5,637,657 and 5,859,126). However, there still exists a need for additives that provide improved uniformity of dried coatings along with synergistically improved cleanability of the dried composition and higher contact angle measurements.

There exists a need for a coating composition that can be applied to a substrate with conventional means to produce a surface of a dried composition with a uniform distribution of components, especially presenting fluorinated. products that durably repel oil on the surface of said dried surface. It is further desirable to have said repellency be demonstrable in increased contact angle and improve cleanability. Herein are described such compositions.

EP 0 033 791 A1 and PT 70 798 A relate to water dispersions for providing a film or coating comprising a particular amount of cocodiethanolamine as an emulsifying agent. The disclosure provides a general list of active ingredients including, among various other ingredients: "lecithin and other soya or animal fat derivatives;...telefluoromers". However, there is no mention of cleanability.

### SUMMARY OF THE INVENTION

One aspect relates to a coating composition comprising a lecithin additive and a fluorochemical according to claim 1.

Another aspect relates to the dried or cured coating of the above composition.

Still another aspect relates to a method of providing improved cleanability to a substrate comprising coating the substrate with the above composition.

Coating compositions comprising a lecithin additive and a fluorochemical as described herein generally result in improved cleanability of such compositions relative to the compositions that comprise either component alone. Lecithin is a substance commonly used in coating applications as a dispersant, surfactant, and/or an emulsifier.

As such, it is known to decrease the contact angle of certain liquids that contact the dried coating to which it is added as compared to the same coating without lecithin. Therefore it is surprising and unexpected that the addition of a lecithin in combination with a fluorochemical results in a dried coating with a higher contact angle and improved cleanability as compared to the dried coating of the same composition with only a fluorochemical added.

Other advantages will become apparent to those skilled in the art upon reference to the detailed description that hereinafter follows.

### BRIEF DESCRIPTION OF THE FIGURES

FIG. 1 depicts the bar graph of results of the Leneta oil stain test. The values depicted are a relative score of cleanability wherein 0 is uncleanable and 10 is completely cleanable. The numeral values can be found herein in Table 1 in Example 1.
FIG. 2 depicts the bar graph of results of the household stain cleanability test. The values depicted are a relative score of cleanability wherein 0 is uncleanable and 10 is completely cleanable. The numeral values can be found herein in Table 2 in Example 2.
FIG. 3 depicts the bar graph of results of the crayon cleanability test. The values depicted are a relative score of cleanability wherein 0 is uncleanable and 10 is completely cleanable. The numeral values can be found herein in Table 3 in Example 3.
FIG. 4 depicts the bar graph of results of the durability of cleanability test. The values depicted are a relative score of cleanability wherein 0 is uncleanable and 10 is completely cleanable. The numeral values can be found herein in Table 4 in Example 4.
FIG. 5 depicts the bar graph of results of the contact angle measurement test of paint #2. The values depicted are measured advancing hexadecane contact angles, which potentially range from 0 to 180 degrees. Zero degrees indicates poor cleanability and 180 degrees indicates a high degree of cleanability. The numeral values can be found herein in Table 5 in Example 5.
FIG. 6 depicts the bar graph of results of the contact angle measurement test of paint #6. The values depicted are the measured advancing hexadecane contact angles, which potentially range from 0 to 180 degrees. Zero degrees indicates poor cleanability and 180 degrees indicates a high degree of cleanability. The numeral values can be found herein in Table 6 in Example 6.

### DETAILED DESCRIPTION OF THE INVENTION

Trademarks are indicated hereby by capitalization.

This invention comprises a coating composition comprising a coating base, a lecithin additive and a fluorochemical, wherein the coating base is an alkyd coating, urethane resin coating, unsaturated polymer coating, latex coating, or water-dispersed coating; wherein a dried coating resulting from said coating composition has an advancing hexadecane contact angle of at least about 50 degrees and demonstrates improved cleanability in a Leneta oil stain test. Preferably the lecithin additive is acylated, most preferably the lecithin additive is acetylated.

By the term "lecithin", as used hereinafter, is meant a phosphatide mixture commonly derived from eggs, fish brewers yeast, and vegetable sources, especially soy; however, any phosphatide mixture can be used in the present invention regardless of source. The four major components of such a phosphatide mixture are phosphatidylcholine, phosphatidylethanolamine, phosphatidylinositol, and phosphatidic acid. The term lecithin as used herein without a modifying adjective may refer to either or both of the acylated and non-acylated forms of lecithin. Lecithins have been referred to in some literature by the following names: PC-55, Ethanolamine, and Serine.

By the term "acylated lecithin" as used herein is meant a lecithin compound that has been treated with an organic acid anhydride under time and conditions to produce an acylated lecithin product. Following the reaction with organic anhydride a dilute solute of alkali can be added to raise the pH to 7.5 - 9.0. A more detailed description of the production of acylated lecithin can be found in U.S. Patents 3,301,881 and 4,479,977.

By the term "aceytlated lecithin" as used herein is meant a lecithin compound that has been treated with methyl-containing organic acid, such as acetic acid, under time and conditions to produce an acetylated lecithin product. A more detailed description of the production of acetylated lecithin can be found in U.S. Patents 3,301,881 and 4,479,977.

By the term "lecithin additive" as used hereinafter is meant a component of a coating composition in which the component is composed significantly of lecithin.

By the term "alkyd coating" as used hereinafter is meant a conventional liquid coating based on alkyd resins, typically a paint, clear coating, or stain. The alkyd resins are complex branched and cross-linked polyesters containing unsaturated aliphatic acid residues.

By the term "urethane coating" as used hereinafter is meant a conventional liquid coating based on Type I urethane resins, typically a paint, clear coating, or stain. Urethane coatings typically contain the reaction product of a polyisocyanate, usually toluene diisocyanate, and a polyhydric alcohol ester of drying oil acids.

By the term "unsaturated polyester coating" as used hereinafter is meant a conventional liquid coating based on unsaturated polyester resins, dissolved in monomers and containing initiators and catalysts as needed, typically as a paint, clear coating, or gel coat formulation.

By the term "water-dispersed coatings" as used herein is meant surface coatings intended for the decoration or protection of a substrate, comprising essentially an emulsion, latex, or suspension of a film-forming material dispersed in an aqueous phase, and optionally containing surfactants, protective colloids and thickeners, pigments and extender pigments, preservatives, fungicides, freeze-thaw stabilizers, antifoam agents, agents to control pH, coalescing aids, and other ingredients. Water-dispersed coatings are exemplified by, but not limited to, pigmented coatings such as latex paints, unpigmented coatings such as wood sealers, stains, and finishes, coatings for masonry and cement, and water-based asphalt emulsions. For latex paints the film forming material is a latex polymer of acrylate acrylic, vinyl-acrylic, vinyl, or a mixture thereof. Such water-dispersed coating compositions are described by C. R. Martens in "Emulsion and Water-Soluble Paints and Coatings" (Reinhold Publishing Corporation, New York, NY, 1965).

By the term "coating base" as used herein is meant a liquid formulation of alkyd coating, Type I urethane coating, water-dispersed coating, latex coating or unsaturated polyester coating, as applied to a substrate for the purpose of creating a lasting film on said surface.

By the term "dried coating" as used herein is meant the final decorative and/or protective film obtained. Such a final film can be achieved by, for non-limiting example, curing, coalescing, polymerizing, interpenetrating, radiation curing, UV curing or evaporation. Final films can also be applied in a dry and final state as in dry coating for a non-limiting example.

By the term "radiation curing" as used herein it is meant the production of a dried coating wherein during the drying process a coating composition is exposed to radiation of any wavelength to cause radiation-initiated bond formation. Said bonding processes include but are not limited to cross-linking, polymerization, coalescence, and free radial formation.

By the term "UV curing" as used herein it is meant radiation curing wherein the radiation substantially consisting of wavelengths in the ultraviolet spectrum. Ultraviolet radiation typically is defined as wavelengths between about 1 and about 400 nanometers in length. Preferably, UV curing utilizes wavelengths between about 200 nm and about 380 nm.

By the term "fluorochemical" as used herein is meant an element, compound, polymer, or composition that contains a fluorine group or consists of fluorine which can be added to a coating base. The fluorochemicals of the present invention can be inherent fluorochemicals in a coating composition that interact with additional additives, or they can themselves be additives to a coating composition. The amount of fluorochemical in a coating composition can be measured by the microgram amount of elemental fluorine present per gram of total weight.

By the term "improved cleanability" as used herein is meant that the additive demonstrates an improvement of the composition's performance when compared to a substantially similar coating that does not contain said additive. Such improvement is preferably evaluated by the Leneta oil stain test for cleanability as described herein.

The coating compositions of the present invention are useful for providing a protective and/or decorative coating to a wide variety of substrates. Such substrates include primarily construction materials and hard surfaces such as wood, metal, wallboard, masonry, concrete, fiberboard, paper, and other materials. Upon application, such coating compositions dry or cure by conventional methods and the dried coatings of the present invention exhibit several valuable properties. Specifically, the dried coatings of this invention, compared with conventional dried coatings, exhibit improved oil repellency and durability thereof, as demonstrated by contact angle measurements and improved cleanability. The improved repellency results in enhanced cleanability of the surface of the dried coating. The lecithin additives and fluorochemicals of the present invention are useful as components of the coating compositions.

Although not wishing to be bound by theory, it is believed that the lecithin additives change the rheology of the liquid composition. Lecithin additives change the surface free energy. This increased fluid flow allows the binder, pigments, dyes, catalysts, thickeners, stabilizers, emulsifiers, texturizers, adhesion promoters, flatteners, and other components of the composition, if present, to distribute more uniformly over the surface to which the coating composition is applied. After drying, the coating containing the lecithin additive produces a coated surface that is more uniform in the dispersal of the binder, pigments, and other composition components than the same composition without a lecithin additive. The more uniform surface exhibits increased repellency to hydrophobic substances. The increase in repellency is demonstrated by an increase in contact angles. The dried coating of this invention resulting from the lecithin additive containing-composition has a durable advancing hexadecane contact angle of not less than 50 degrees.

Lecithin additives act synergistically when included in a coating composition also containing fluorochemicals. Without being bound by postulation, the mechanism for lecithins and fluorochemicals is as follows. It is believed that fluorochemicals provide increased oil repellency and improved cleanability by migrating to the surface of the coating. In combination with a lecithin additive, this migration is enhanced and the dispersion of fluorochemical across the surface of the dried coating of the present invention is more uniform.

When the present invention is practiced as described herein, the result is a chemically-stable, dried coating surface that provides durability of the improved cleanability and the improved oil repellency. Typically the dried coating resulting from a lecithin additive and fluorochemical-containing composition increases the advancing hexadecane contact angle to 50 degrees or more. Generally, the dried coating resulting from a lecithin additive- and fluorochemical-containing composition increases cleanability of the coated surface by either at least about 50% or more, or by at least about 1 point or more on a 0 to 10 point scale as demonstrated by the Leneta oil test when compared to a coating lacking the lecithin and fluorochemical additives. Preferably the present invention imparts an improvement of about 2 points or more on a 0 to 10 point scale in the Leneta oil stain test when compared to an untreated coating composition. Most preferably, the present invention imparts about a 3 point or greater improvement on a 0 to 10 point scale in the Leneta oil stain test when compared to a coating lacking the lecithin and fluorochemical additives. By durable improved cleanability, durable oil repellency, and durable increased hexadecane contact angles are meant that the advantageous surface properties of the dried coatings of the present invention are retained following various simulations of repeated surface cleaning. Thugs the oil repellency and cleanability are retained after conventional washing of the surface.

The coating compositions of this invention contain sufficient lecithin additive such that the coating composition contains, by weight in the content of the composition, from about 0.1 to about 10.0% lecithin additive, or preferably from about 0.1 to about 5.0% lecithin additive, or more preferably from about 0.5 to about 5.0% lecithin additive, or most preferably from about 0.5 to about 1.0% lecithin additive.

The contact angle formed between a surface and a drop of liquid is a measure of the wettability or repellency of the surface to the liquid. A wettable surface has low contact angles close to zero degrees. A repellent surface has higher contact angles. Thus, the contact angle formed by an oily liquid such as hexadecane is widely used as a measure of the oil repellency of a surface. In general, higher hexadecane contact angles indicate that a surface has greater dirt and stain repellency, and easier cleanability.

The dried coating of the present invention resulting from said coating composition has a durable advancing hexadecane contact angle of at least about 50 degrees. More preferably the dried coating of the present invention has a durable advancing hexadecane contact angle of not less than about 60 degrees. Most preferably, the dried coating of the present invention has a durable advancing hexadecane contact angle of not less than about 70 degrees. Also the dried coatings of certain embodiments of the present invention show an improvement in the durable advancing hexadecane contact angle of at least about 10 degrees or more, when compared to a similar coating that does not contain the lecithin additives and fluorochemicals as in the present invention. Preferably such a difference is at least about 20 degrees or more. Most preferably such a difference is at least about 50 degrees or more.

The lecithin additives are effectively introduced to the coating base by thoroughly stirring lecithin, in a powder, triglyceride containing solution, or other form, into the coating base at room temperature. More elaborate mixing can be employed such as using a mechanical shaker or providing heat or other methods. Such methods are not necessary and do not substantially improve the final composition. The fluorochemicals, when used in combination with the lecithin in the coating composition of the present invention, are also adequately introduced by thorough stirring but may also be present as fluorine sources already in the coating base. Likewise, more elaborate methods of combining the fluorochemical with the coating base can also be used with success but are not necessary and do not substantially improve the final composition. Generally, the manufacturer's directions should be followed to correctly introduce the fluorochemical. The lecithin additive and the fluorochemical can be introduced at the same time or in any sequence with no detriment to the final product.

Any lecithin can be used as a lecithin additive in the present invention. Lecithin is commercially available from the following companies: The Solae Company, St. Louis, MO; Unimills, Zwijndrecht, the Netherlands; Lucas Meyer GmbH & Co., Hamburg, Germany; N.V. Vamo Mills, Izegem, Belgium; Unitechem Chemical Co., Ltd., Tianjin China; PanChem (Tianjin) International Trading and Industrial Co. LTD, Teda, Tianjin, China; Fraken Biochem Co., Ltd. Qingdao, Shandong, China. The Solae Company (St. Louis, MO) is the preferred manufacturer of lecithin for use as the lecithin additive in the present invention. Naturally occurring lecithin can be found in, for example, eggs, soybean oil, legumes, grains, wheat germ, nuts, seeds, fish, and brewers yeast. Lecithin isolated from soybean oil is preferred for use with the present invention.

Lecithin is a mixture of phosphatides. The four major components of such a phosphatide mixture are phosphatidylcholine, phosphatidylethanolamine, phosphatidylinositol, and phosphatidic acid.

Phosphatidylcholines should generally follow this formula: 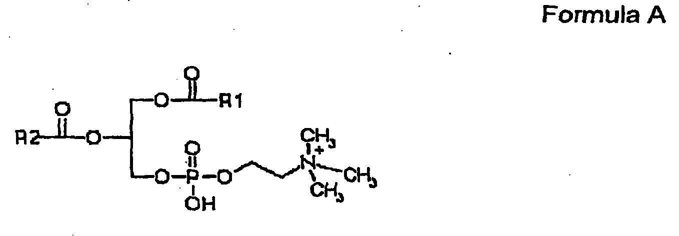 wherein
R1 and R2 are about a C₈ to about a C₃₀ carbon chain.
Phosphatidylethanolamines should generally follow this formula: 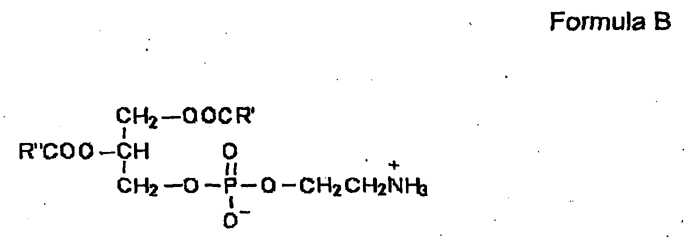 wherein
R' and R" are about C₆ to about a C₁₈ carbon chains.
Phosphatidylinositols should generally follow this formula: 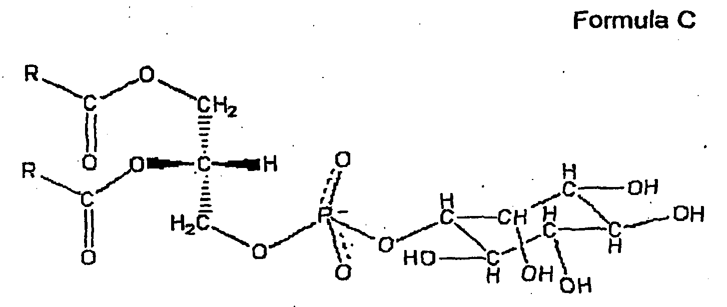 wherein
R represents carbon chains of about 8 carbons to about 30 carbons in length.
Phosphatidic acids should generally follow this formula: 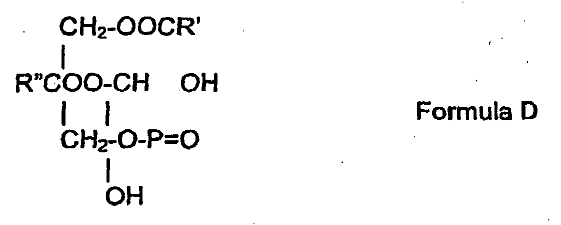 wherein
R' and R" are carbon chains of about 8 carbons to about 30 carbons in length.

More preferably the lecithin used with the present invention is an acylated lecithin. Such acylated lecithins are not naturally occurring, however, they are known and described in the art. Acylated lecithin is produced by first obtaining lecithin hydrates from the degumming of crude soybean oil. The acylation process is begun by adding 2-5% of an organic anhydride, acetic anhydride is most preferred, to the lecithin hydrate. The amount of organic anhydride needed generally depends on the level of phosphatides in the gums. Sufficient organic anhydride should be added so that the final product will have, but not be limited to, an amine nitrogen content of about 1.2 mg nitrogen or less per gram of product. Amine nitrogen is determined by formol titration, as described in U.S. Patent 3,301,881.

Optionally, following the reaction with organic anhydride, a dilute solution (1-30%) of an alkali base (15% NaOH or KOH are preferred) is added to raise the pH to 7.5-9.0, preferably 7.5 to 8.5. The product is then vacuum-dried at 28" Hg vacuum (94.82 kPa) and 150 - 250°F (66° -121°C) to a final moisture within Food Chemicals Codex (FCC) III lecithin specifications. This processing method allows the resulting product to be clear.

Fluidity and phase stability are established via the addition of fatty acids and soybean salad oil (or other oleaginous oils) to a percent acetone insolubles (AI) of about 50-66% (preferably 55%) and to less than 36 acid value (AV). The final product will have viscosities in the range of 1,000-10,000 centipoise (preferably 2000-3000; Brookfield LVT, Brookfield Engineering Company, Spindle 4, 30 rpm, 25°C). These products maintain a clear single phase upon storage from -30° to 150°F (-34° to 66°C).

Most preferably the lecithin used with the present invention is acetylated lecithin. Acetylated lecithin can be produced using the methods described above for producing acylated lecithin wherein the organic anhydride is acetic anhydride.

Any fluorochemical can be utilized in the coating composition of the present invention. These include various perfluoroalkyl esters, fluorinated urethanes, fluorinated acrylic or methacrylic copolymers, fluorinated anionic surfactants, fluorinated sulfonamides, and fluorinated diols. Many such fluorochemicals are commercially available; the preferred distributor for fluorochemicals for use with this invention is E.I. du Pont de Nemours and Company, Wilmington, DE.

Esters containing perfluoroalkyl groups preferred for use herein are an ester of an unsaturated acid and a fluorinated alcohol or thiol selected from the group consisting of Formulas 1 a, 1b, and 2 as follows:

R_{f}-X-A-OC-R, Formula 1a

R_{f}X-A-OC-Rₓ-CO-A-X-R_{f}, Formula 1b

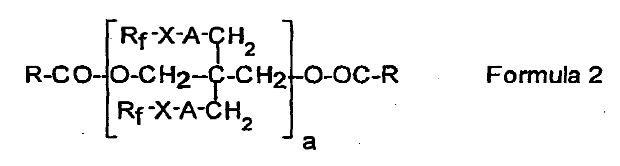

wherein:
R_{f} is a C₂-C₂₀ perfluoroalkyl radical or a C₅-C₃₈ perfluoroalkyl radical having at least one ether oxygen atom;
R is a C₃-C₂₁ unsaturated aliphatic hydrocarbon radical, a C₈-C₁₃ aryl radical having at least one non-aromatic double bond, or mixtures thereof;
X is independently -(CH₂)ₘ-, -CON(R₁)R₂-, -SO₂N(R1)R₂-, or -(OCH₂CHR₃)_{b}O-, wherein m is 1 to about 20; b is 3 to about 15;
R₁ is H or an alkyl radical of 1 to about 4 carbon atoms, R₂ is C₁-C₁₂ alkylene, and R₃ is H or CH₂Cl;
A is O or S;
Rₓ is a divalent C₃-C₂₂ unsaturated aliphatic hydrocarbon radical, a divalent C₈-C₁₃ aryl radical having at least one non-aromatic double bond, or mixtures thereof; and
a is 1 or 2.

Such esters and their preparation are detailed In U.S. Patent 5,859,126.

Fluorochemical urethanes preferred for use in the present invention include a polyfluorourethane compound which is the product of the reaction of (1) at least one diisocyanate, polyisocyanate, or mixture of polyisocyanates containing at least three isocyanate groups per molecule, (2) at least one fluorochemical compound containing at least one Zerewitinoff hydrogen in an amount sufficient to react with 5% to 80% of the isocyanate groups in the diisocyanate or polyisocyanate, (3) at least one compound of the formula R₁₀-(R₂)ₖ-YH in an amount sufficient to react with 5% to 80% of the isocyanate groups in the diisocyanate or polyisocyanate and wherein R₁₀ is a C₁-C₁₈ alkyl, C₁-C₁₈ omega-alkenyl radical, or C₁-C₁₈ omega-alkenoyl; R₂ is -CₙH₂ₙ- optionally endcapped by -[OCH₂C(R₄)H]ₚ-, -JOCH₂C(CH₂Cl)H]ₚ-, or -C(R₅)(R₈)(OCH₂C[CH₂Cl]H)ₚ- wherein R₄, R₅, and R₆ are the same or different and are H or a C₁-C₆ alkyl radical, n is 0 to 12, p is 1 to 50; Y is O S, or N(R₇) wherein R₇ is H or C₁-C₆ alkyl; and k is 0 or 1, and (4) water in an amount sufficient to react with 5% to 60% of the isocyanate groups in the diisocyanate or polyisocyanate. Such fluorochemical urethanes and their preparation are as described in U.S. Patent 5,827,919.

Fluorinated surfactants preferred for use in the present invention comprise a mixture of a fluoroalkyl phosphate and a fluoroacrylate polymer, wherein the fluoroalkyl phosphate is of Formula 3A or 3B 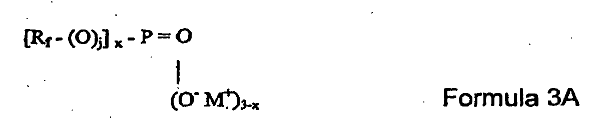 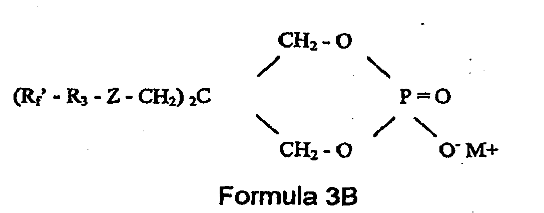 wherein:
R_{f} is F(CF₂CF₂)_{d}(CH₂)ₐ-,
F(CF₂CF₂)_{d}CH₂CH₂(OCH₂CH₂)_{b}-,
F(CF₂CF₂)_{d}-
F(CF₂CF₂)_{d}CH=CH(CH₂)_{c}-, or
G₈F₁₇SO₂N(R)CH₂CH₂-,
R_{f}' is a fluoroaliphatic group having a linear or branched perfluorocarbon chain having from 2 to 20 carbon atoms,
x is from about 1 to about 2,
j is 1 or 0 or a mixture thereof,
d is 1 to about 8, or a mixture thereof, and preferably is from about 3 to about 6,
M⁺ is an ammonium ion, an alkali metal ion, or an alkanolammonium ion, such as ethanolammonium or diethanolammonium, and preferably is ammonium,
R₃ is an alkylene group having from 1 to about 8 carbon atoms, and is preferably ethylene,
Z is -O-, -S-, or -NH-,
a is from about 2 to about 10 and preferably is 2,
b is from about 3 to about 20 and preferably is from about 6 to about 13,
c is from about 2 to about 20, and preferably is 8, and R is H or an aliphatic group containing 1 to about 4 carbon atoms,
and the fluoroacrylate polymer typically has multiple repeating units. Such copolymers are further detailed and prepared as described in European Patent 1238004.

In another embodiment of the coating composition of the present invention the composition comprises a fluorinated acrylic or methylacrylic copolymer, or salt thereof, as the fluorochemical component. Such copolymers are prepared by reacting a fluoroalcohol (CF₂CF₂)ₙCH₂CH₂OH, wherein n is from about 1 to about 10, with an unsaturated carboxylic acid, such as an acrylic acid or methylacrylic acid, followed by neutralization with a base, such as ammonia.

Other fluorochemicals can also be used in the present invention, such as 2-N-methyl-N-ethanolperfluorooctane sulfonamide, available commercially from Dainippon Ink and Chemicals Inc., DIC Building, 7-20 Nihonbashi 3-chome, Chuo-ku, Tokyo 103, Japan. Fluorinated diols prepared by the procedure of U.S. Patent 4,946,992 and fluorinated thiols prepared as in U.S. Patent 3,544,663, in particular Example 1 therein, are also suitable for use in the present invention.

The fluorochemicals are incorporated into the coating base in concentrations sufficient to afford a dried coating containing from about 5 micrograms per gram to about 10,000 micrograms per gram by weight of fluorine, and preferably from about 50 micrograms per gram to about 5,000 micrograms per gram of fluorine, and most preferably from about 150 micrograms per gram to about 1,000 micrograms per gram of fluorine based on the nonvolatile content of the coating composition. The total amount of fluorine content in a coating composition can be quantitatively measured, for instance, using a Wickbold torch or Antek Fluorine analyzer, followed by ion selective electrode measurement.

Many of the coating compositions of the present invention comprise a pigment. Any pigment can be used with the present invention. The term "pigment" as used herein means opacifying and non-opacifying ingredients which are particulate and substantially non-volatile in use. Pigment as used herein includes ingredients labeled as pigments, but also ingredients typically labeled in the coating trade as inerts, extenders, fillers, and similar substances.

Representative pigments that can be used with the present invention include, but are not limited to, rutile and anatase TiO₂, clays such as kaolin clay, asbestos, calcium carbonate, zinc oxide, chromium oxide, barium sulfate, iron oxide, tin oxide, calcium sulfate, talc, mica, silicas, dolomite, zinc sulfide, antimony oxide, zirconium dioxide, silicon dioxide, cadmium sulfide, cadmium selenide, lead chromate, zinc chromate, nickel titanate, diatomaceous earth, glass fibers, glass powders, glass spheres, MONASTAL Blue G (C.I. Pigment Blue 15), molybdate Orange (C.I. Pigment Red 104), Toluidine Red YW (C.I. Pigment 3)-process aggregated crystals, Phthalo Blue (C.I. Pigment Blue 15)-cellulose acetate dispersion, Toluidine Red (C.I. Pigment Red 3), Watchung Red BW (C.I. Pigment Red 48), Toluidine Yellow GW (C.I. Pigment Yellow 1), MONASTRAL Blue BW (C.I. Pigment Blue 15), MONASTRAL Green BW (C.I. Pigment Green 7), Pigment Scarlet (C.I. Pigment Red 60), Auric Brown (C.I. Pigment Brown 6), MONASTRAL Green G (C.I. Pigment Green 7), MONASTRAL Maroon B, MONASTRAL Orange, and Phthalo Green GW 951.

Titanium dioxide (TiO₂) is the preferred pigment to use with the present invention. Titanium dioxide pigment, useful in the present invention, can be in the rutile or anatase crystalline form. It is commonly made by either a chloride process or a sulfate process. In the chloride process, TICl₄ is oxidized to TiO₂ particles. In the sulfate process, sulfuric acid and ore containing titanium are dissolved, and the resulting solution goes through a series of steps to yield TiO₂. Both the sulfate and chloride processes are described in greater detail in "The Pigment Handbook", Vol. 1, 2nd Ed., John Wiley & Sons, NY (1988).

Titanium dioxide particles have an average size of generally less than 1 micron but can vary up to as large as an average size of 10 microns. Preferably, the particles have an average size from about 0.020 to about 0.95 microns, more preferably, from about 0.050 to about 0.75 microns and most preferably from about 0.075 to about 0.50 microns.

If the pigment is titanium dioxide it can be substantially pure titanium dioxide or can contain other metal oxides, such as silica, alumina, zirconia, and the like. Other metal oxides can become incorporated into the pigment particles for example, by co-oxidizing or co-precipitating titanium compounds with other metal compounds. If co-oxidized or coprecipitated metals are present, they are preferably present in an amount from about 0.1 to about 20 percent by weight, as the metal oxide, preferably, from about 0.5 to about 5 percent by weight, more preferably from about 0.5 to about 1.5 percent by weight based on the total pigment weight.

The titanium dioxide pigment can also bear one or more metal oxide surface coatings. These coatings can be applied using techniques known by those skilled in the art. Examples of metal oxide coatings include silica, alumina, and zirconia, among others. Such coatings can be present in an amount from about 0.1 to about 10 percent by weight, based on the total weight of the pigment, preferably from about 0.5 to about 3 percent by weight.

The titanium dioxide pigment is surface treated to provide metal oxide surface coatings. By "surface treated" it is meant titanium dioxide pigment particles that have been contacted with the compounds described herein wherein the compounds are adsorbed on the surface of the titanium dioxide particle or a reaction product of at least one of the compounds with the titanium dioxide particle is present on the surface as an adsorbed species or chemically bonded to the surface. The compounds or their reaction products or combination thereof can be present as a coating, either single layer or double layer, continuous or non-continuous, on the surface of the pigment. Typically, a continuous coating comprising a silicon-containing compound and an organic compound is on the surface of the pigment.

Non-limiting commercial examples of such coated titanium dioxide pigments include TI-PURE R706 and TI-PURE R931, available from E.I. du Pont de Nemours and Company, Wilmington, DE; TIOXIDE R-XL and R-HD4, available from Huntsman Tioxide, Billingham, England; TIONA RCL-3, RCL-376, and RCL-373 available from Millennium Chemicals, Inc., Hunt Valley, MD; KRONOS 2044, 2131, 2043, and 2047, available from Kronos Worldwide, Incorporated, Dallas, TX; TIPAQUE R-780 and R-780-2 available from Ishihara Sangyo Kaisha, Limited, Osaka, Japan; KEMIRA RDE2, RDD, RDD1, OR-572, and OR-573 available from Kemira Oyj, Helsinki, Finland; PGE-113 available from Cristal, Jeddah, Saudi Arabia; JR-800 and JR-801 available from Tayca Corporation, Osaka, Japan; R-7E available from Sakai Chemical Industry Company, Limited, Osaka, Japan; TYTANPOL R-211 available from LG Chem, Seoul, Korea; KEMOX CR-813 available from Kerala Minerals and Metal, Limited, Kollam, India; RC84 available from Cinkarna, Celje, Slovenia; and CR-813, RD, and R-500, available from Kerr-McGee Corporation, Oklahoma City, OK.

The present invention can by used with almost any coating base. For non-limiting examples, it can be used with an alkyd coating, a urethane coating, an unsaturated polyester coating, a water-dispersed coating, a latex coating, and a flat-based coating.

Conventional alkyd coatings utilize, as the binder or film-forming component, a curing or drying alkyd resin. Alkyd resin coatings contain unsaturated aliphatic acid residues derived from drying oils. These resins spontaneously polymerize in the presence of oxygen or air to yield a solid protective film. The polymerization is termed "drying" or "curing" and occurs as a result of autoxidation of the unsaturated carbon-carbon bonds in the aliphatic acid component of the oil by atmospheric oxygen. When applied to a surface as a thin liquid layer of formulated alkyd coating, the cured films that form are relatively hard, non-melting, and substantially insoluble in many organic solvents that act as solvents or thinners for the unoxidized alkyd resin or drying oil. Such drying oils have been used as raw materials for oil-based coatings and are described in the literature.

Urethane coatings are classified by ASTM D-1 into five categories. Type I urethane coatings contain a pre-reacted autoxidizable binder as described in Surface Coatings Vol. I, previously cited. Type I urethane binders, also termed urethane oils, oil-modified polyurethanes, or urethane alkyds, are the largest volume category of polyurethane coatings and include typical paints, clear coatings, or stains. Urethane coatings typically contain the reaction product of a polyisocyanate, usually toluene diisocyanate, and a polyhydric alcohol ester of drying oil acids. The cured coating is formed by air oxidation and polymerization of the unsaturated drying oil residue in the binder.

Unsaturated polyester resins contain as the unsaturated prepolymer the product obtained from the condensation polymerization of a glycol such as 1,2- propylene glycol or 1,3-butylene glycol with an unsaturated acid such as maleic (or of maleic and a saturated acid, e.g., phthalic) in the anhydride form. The unsaturated prepolymer is a linear polymer containing unsaturation in the chain. This is dissolved in a suitable monomer, for instance styrene, to produce the final resin. The film is produced by copolymerization of the linear polymer and monomer by means of a free radical mechanism. The free radicals can be generated by heat, or more usually by addition of a peroxide, such as benzoyl peroxide, separately packaged and added before use. Such coating compositions are frequently termed "gel coat" finishes. In order that curing can take place at room temperature, the decomposition of peroxides into free radicals is catalyzed by certain metal ions, usually cobalt. The solutions of peroxide and cobalt compound are added separately to the mix and well stirred before application. The unsaturated polyester resins that cure by a free radical mechanism are also suited to irradiation curing using, for instance, ultraviolet light. This form of cure, in which no heat is produced, is particularly suited to films on wood or board. Other radiation sources, for instance electron-beam curing, are also used.

Water-dispersed coatings are composed of water as an essential dispersing component. "Water-dispersed coating" is a general classification that describes a number of formulations and may include members of the above described classifications as well as members of other classifications. Water-dispersed coatings may consist essentially of an emulsion, latex, or suspension of a film-forming material dispersed in an aqueous phase, and generally containing other common coating ingredients. Water-dispersed coatings are exemplified by, but not limited to, pigmented coatings such as latex paints, unpigmented coatings such as wood sealers, stains, and finishes, coatings for masonry and cement, and water-based asphalt emulsions.

The present invention further comprises a method of providing improved cleanability to a substrate comprising coating the substrate with a coating composition comprising a lecithin additive and fluorochemical. The lecithin additive and fluorochemical are as described above and are used in the amounts as described above. Methods of application of the coating compositions to surfaces and the drying properties of the coating compositions are essentially unaffected by the presence of the combination of lecithin additives and fluorochemicals. The coating compositions of the present invention are applied to the substrate by conventional methods. Non-limiting examples include application by brush, spray, etc. After drying, the dried coating has durable oil repellency, and improved cleanability. These desirable attributes remain after repeated cleaning as demonstrated by the retention of the hexadecane contact angle and as shown by direct measure or demonstrated benefit of repeated cleanability.

The present invention further comprises a dried coating comprising a protective film obtained after the volatile components of a coating composition comprising a lecithin additive and a fluorochemical, as described above, have evaporated or otherwise dissipated. The durable hexadecane advancing contact angle of the dried composition is equal to or greater than about 50 degrees, preferably equal to or greater than about 60 degrees, and more preferably equal to or greater than about 70. The dried coatings of certain embodiments of the present invention show an improvement in the durable advancing hexadecane contact angle of 10 degrees or more, when compared to a similar coating that does not contain the lecithin additives and fluorochemicals of the present invention. Preferably such a difference is 20 degrees or more. Most preferably such a difference is 50 degrees or more.

The improved cleanability of the dried coatings of the present invention can be characterized by a greater than about 50% improvement on a Leneta oil stain test when compared to a similar dried coating that does not contain the lecithin additive and fluorochemical. Also, the improved cleanability of the present invention can be characterized by a greater than about a 1 point or more improvement on a Leneta oil stain test when compared to a similar dried coating that does not contain the lecithin additive and fluorochemical; preferably the improvement is about 2 points or more; most preferably the improvement is 3 points or more.

The present invention further comprises a kit comprising a lecithin additive and fluorochemical which provides improved cleanability to a coating base after drying when added thereto. The lecithin additive and fluorochemical in the kit are as described above. The lecithin additive and fluorochemical can be packaged together in a kit, in combination or as individual components, in either powder or liquid form, for example in a triglyceride containing solution. The kit can be prepared in a conventional means of mixing, blending, or homogenizing. Such kits are designed to be mixed into a predetermined quantity of coating base. Each kit has a quantity of lecithin additive and fluorochemical measured to be distributed in a predetermined quantity of coating base so that the final concentration of the lecithin additive and fluorochemical will be of the desired concentration. Preferably, each kit has a quantity of lecithin additive so that the lecithin additive is between about 0.1% and about 10% by weight in the final liquid coating composition, more preferably the lecithin additive is between about 0.5% and about 5.0% by weight in the final liquid coating composition. Preferably each kit has a quantity of fluorochemical so that the dry coating of the coating composition will contain between about 5 micrograms per gram to about 10,000 micrograms per gram by weight of fluorine, more preferably about 50 micrograms per gram to 5,000 micrograms per gram by weight of fluorine, most preferably about 150 micrograms per gram to 1,000 micrograms per gram by weight of fluorine. Such a kit can also, but not necessarily, contain filler, pigment, binder, emulsifier, preservatives, surfactants, and other ingredients typical of coating compositions.

Such kits are prepared to be mixed into a coating base prior to use. Kits can be mixed into the coating base in any way that allows for thorough distribution of the ingredients of the kit within the coating base. The preferred method of combining a kit and a coating base is to introduce the total contents of the kit to coating composition followed by shaking on a mechanical shaker. The introduction of the kit to the coating base can occur at any time, including during manufacture, prior to sale, at the point of sale, or by the end-user prior to application of the product coating composition. It is preferred that a kit of the present invention is added at the time color pigments are added.

### TEST METHODS

### Method 1 - Leneta oil Stain Test

The test method described herein is a modification of ASTM 3450 - 00 - Standard Test Method for Washability Properties of Interior Architectural Coatings.

Drawdowns were prepared by applying a coat of coating composition on Leneta Black MYLAR cards (The Leneta Company, Mahwah, NJ) using a BYK-Gardner automatic drawdown machine (BYK-Gardner, Silver Spring, MD) and a 5 mil (0.127 mm) Bird applicator drawdown blade (BYK-Gardner, Silver Spring, MD). The drawdown speed was set to be slow enough to prevent pinholes or holidays in the resulting coating. Several drawdowns were prepared for each paint and additive combination. The coated cards were allowed to dry for seven days for testing for cleanability.

Staining media were prepared using VASELINE NURSERY JELLY (Marietta Corporation, Cortland, NY) and Leneta Carbon Black Dispersion in Mineral Oil (ST-1) (The Leneta Company, Mahwah, NJ). The petroleum jelly was melted in a clean glass container for 30 minutes in an oven set at 70 °C. Then the petroleum jelly was mixed with 5% of its weight of Leneta Carbon Black. For instance, 95 g of petroleum jelly was mixed with 5 g of Leneta Carbon Black to produce 100 g of staining media. The mixed staining media was cooled for several hours in a refrigerator at 4°C.

Cleaning media were prepared using a JOY ULTRA CONCENTRATED COUNTRY LEMON dishwashing liquid (The Procter & Gamble Company, Cincinnati, OH). Dishwashing liquid was mixed with deionized water at a ratio of 1 g of dishwashing liquid for every 99 g of water.

Each drawdown was stained in the same manner. A staining template was prepared from a MYLAR Leneta card by cutting out a 3" by 1" (7.6 cm by 2.5 cm) strip from the interior of the card. The template was placed over a coated drawdown card to be stained. Staining media was spread over the drawdown card and the template using a spatula so that none of the drawdown card remained visible. Excess stain was removed with a spatula. Stained cards were allowed to set and dry for 60 minutes.

In preparation for cleaning, scrap MYLAR was used to gently scrape the excess dried stain from the stained section of the card, both the washed and unwashed sections. Similarly a c-folded clean paper towel was used to remove unset stain from the entire card, both the washed and unwashed sections. The card was then securely attached to a BYK-Gardner Abrasion tester (BYK-Gardner, Silver Spring, MD) or other method. A piece of cheesecloth (VWR International, San Diego, CA) was attached to the cleaning block on the abrasion tester. The cheesecloth was folded and attached so that the contacting surface was 8 layers thick. 10 mL of cleaning solution prepared as specified above was applied to the contacting surface of the cheesecloth. The abrasion tester was run through 5 cycles (10 wipes) over a stained section of the drawdown card that is henceforth designated as stained and cleaned. Excess cleaning solution was rinsed away with deionized water for a few seconds and then allowed to dry for 2 hours or until completely dry by visible inspection. One section of each stained drawdown card was cleaned in this manner.

Cleanability was determined by evaluating the stained and washed painted portion of the drawdown card in comparison to both the unstained and painted portion of the card and the stained and unwashed painted portion of the card. A HunterLab ULTRASCAN Pro colorimeter (Hunter Associates Laboratory, Inc, Reston, VA) was used to take three different measurements for each designated painted portion of the drawdown card: stained and washed, unstained, and stained and unwashed. The measurements were averaged to obtain a mean value for that section that is used to evaluate the cleanability rating for that card as described below. The colorimeter was set to read the L* function and the aperture was no larger than ¾ of an inch (1.9 cm).

A cleanability score was calculated ranging from 0-10 wherein 0 is uncleanable, and 10 is completely cleanable. Values 1 - 9 were established in numerical order equidistant from 0, 10, and one another on a linear slope. The above description fits the following equation: [(mean L* value of stained and washed painted section) - (mean L* value of stained and unwashed painted section)]/[(mean L* value of unstained painted section) - (mean L* value of stained and unwashed painted section)] * 10 = cleanability rating

### Method 2 - Detergent Wash Durability

Wash durability of the lecithin- and fluorochemical-containing coating compositions to surface cleaning was determined using a Gardco Model D10 Wash & Wear Tester (Paul N. Gardner Co., Pompano Beach, FL) and a GARDCO WA-2225 abrasion boat. A 6.5 x 1 inch (16.5 x 2.5 cm) test strip cut from the coated Leneta test panel was positioned on the test sample tray and fastened thereto with 3/4 inch (1.9 cm) wide transparent tape such that about a 2 x 3/4 inch (5.1 x 1.9 cm) portion of the coated test panel would be scrubbed. The abrasion boat base plate was covered with a folded 9 x 9 inch (22.9 x 22.9 cm) piece of De Royal Textiles IDEALFOLD bleached grade 20B cotton cheesecloth available from DeRoyal Textiles, Camden, SC. The cheesecloth was folded perpendicular to the seam in half, and half again, and was fastened to the base plate such that the scrubbing surface layers were seam free. The cheesecloth pad was wet with 20 ml of a 1% aqueous JOY detergent as described above (Procter & Gamble Co., Cincinnati, OH) solution before the test strip was scrubbed. The test strip was removed after a predetermined number of scrub cycles, washed free of the JOY solution with water, and air dried one day before the test strips were evaluated using the Leneta oil Stain test, Test Method 1, described above.

### Method 3 - Household Stain Test

The test method described herein is a modification of ASTM 4828 - 94 - Standard Test Method for Practical Washability of Organic Coatings.

MYLAR Cards were prepared as in Test Method 1. Staining was performed using a variety of common stain materials. The each stain was applied to a 1 inch (2.54 cm) band running the length of the panel. The panel was allowed to set for 2 hours.

One portion of the marked panel was cleaned as described in Test Method 1. At least three tests were performed for each set of conditions.

The cleanability rating was determined using a visual rating system, which has a relative range from 0 to 10. The score 10 indicates that the cleaned stained portion of Leneta card appears to be identical to the unwashed and unstained portion of the card. The score 0 indicates that the cleaned stained portion of Leneta card appears to be identical to unwashed and stained portion of the card. The score 1-9 was assigned as estimate the percentage of stain was removed with cleaning. A set of Leneta strips with standardized cleanability ratings was prepared to aid visual cleanability evaluation.

### Method 4 - Contact Angle Measurement

Contact angles are measured by the Sessile Drop Method, which is described by A. W. Adamson in The Physical Chemistry of Surfaces, Fifth Edition, Wiley & Sons, New York, NY, 1990. Additional information on the equipment and procedure for measuring contact angles is provided by R. H. Dettre et al. in "Wettability", Ed. by J. C. Berg, Marcel Dekker, New York, NY, 1993.

In the Sessile Drop Method, a Ramè-Hart optical bench (available from Rame-Hart Inc., 43 Bloomfield Ave., Mountain Lakes, NJ) is used to hold the substrate in the horizontal position. The contact angle is measured at a prescribed temperature with a telescoping goniometer from the same manufacturer. A drop of test liquid is placed on a surface and the tangent is precisely determined at the point of contact between the drop and the surface. An advancing angle is determined by increasing the size of the drop of liquid and a receding angle is determined by decreasing the size of the drop of liquid. The data are presented typically as advancing and receding contact angles.

The relationship between water and organic liquid contact angles, and the cleanability and dirt retention of surfaces is described by A. W. Adamson, above. In general, higher hexadecane contact angles indicate that a surface has greater dirt and soil repellency, and easier surface cleanability.

By durable oil repellency and durable increased hexadecane contact angles are meant that the advantageous surface properties of modified dried coatings of the present invention are retained following repeated surface cleaning.

The water and hexadecane advancing and of the dried coating compositions of the present invention were measured on coatings cast on Leneta P-121-10N dull black, scrub test panels available from Leneta Company, Mahwah, NJ.

### MATERIALS

The following materials were employed in the examples hereinafter unless otherwise indicated.

### A. Coating Bases (Paints)

Paint #1) Styrene Acrylic resin, 2.2% gloss at 85 degrees.
Paint #2) Acrylic resin, 3.9% gloss at 85 degrees.
Paint #3) Acrylic resin, 4.8% gloss at 85 degrees.
Paint #4) Vinyl Acrylic resin, 1.8% gloss at 85 degrees.
Paint #5) Styrene Acrylic resin, 2.0% gloss at 85 degrees.
Paint #6) Styrene Acrylic resin, 2.3% gloss at 85 degrees.

### B. Fluorochemicals

1) Fluorochemical 1 is a polyfluorourethane prepared as described in U.S. patent 5,827,919. Fluorochemical 1 as used herein contained about 90,000 microgram of elemental fluorine per gram.

### C. Lecithins additives

1) Lecithin additive 1, The Solae Company, St. Louis, MO, is an acetylated lecithin additive as described in U.S. Patents 3,301,881 and 4,479,977. This additive is noted in the Tables and Drawings as "Lecithin".

### D. Stains

1) Leneta Carbon Black Dispersion in Mineral Oil (ST-1), The Leneta Company, Mahwah, NJ.
2) VASELINE NURSERY JELLY, Marietta Corporation, Cortland, NY.
3) Blue or black CRAYOLA crayon, Binney & Smith, Easton, PA.
4) Lipstick, COVERGIRL Really Red 575, Procter & Gamble, Cincinnati, OH.
5) Pencil, #2 or HB.
6) Blue or Black CRAYOLA Washable marker, Binney & Smith, Easton, PA.
7) SMUCKER'S Concord Grape Jelly, The J.M. Smucker Company, Orrville, OH.
8) Ketchup, H.J. Heinz Company, Pittsburgh, PA.

### E. Cleaning Compositions

1) JOY Ultra Concentrated Country Lemon dishwashing liquid, The Procter & Gamble Company, Cincinnati, OH.

### EXAMPLES

### Example 1

The coating compositions and materials used are described in the Materials section. The samples used in Example 1 were prepared according to the description provided in Table 1. The previously described additives were added by percent weight and thoroughly mixed by mechanical shaking. Care was taken to prevent the development of foam and to allow any foam that did develop to dissipate. The control sample did not receive any lecithin additive nor any additional fluorochemical: The resulting formulations were tested for cleanability using Test Method 1.

The results are visually depicted in Fig. 1 and the numeral values shown below in Table 1. The values are a relative score of cleanability wherein 0 is uncleanable and 10 is completely cleanable.

**TABLE 1**

| Cleanability Ratings for Leneta Oil Stain | | | | | | |
|---|---|---|---|---|---|---|
| Samples | Paint #1 | Paint #2 | Paint #3 | Paint #4 | Paint #5 | Paint #6 |
| None - Control | 5.1 | 3.8 | 5.2 | 6.4 | 2.8 | 3.0 |
| 1% Lecithin and 0.2% Fluorochemical #1 | 9.7 | 7.9 | 9.6 | 7.3 | 5.7 | 8.5 |

Table 1 demonstrates both a 2 point or greater and a 50% or greater improvement in cleanability of coating compositions containing 1% lecithin and at least 180 micrograms per gram fluorine when compared to the control sample for Paint #1, Paint #2, Paint #3, Paint #5 and Paint #6.

### Example 2

Coating compositions based on Paint #6 were prepared in a manner similar to Example 1 having the compositions shown in Table 2. Materials and painted MYLAR panels were prepared as described in Example 1 and Test Method 1 and 3. Tests were conducted according to Test Method 1 and 3 using the coating compositions and stains as described Table 2.

The results are visually depicted in Fig. 2 and the numeral values shown below in Table 2. The values are a relative score of visually determined cleanability wherein 0 is uncleanable and 10 is completely cleanable.

**TABLE 2**

| Cleanability Ratings for Household Stains | | | | | | |
|---|---|---|---|---|---|---|
| Samples | Leneta Oil Stain | Lipstick | Pencil | Washable Marker | Jelly | Ketchup |
| None - Control | 4.0 | 7 | 9 | 9 | 10 | 10 |
| 0.5% Fluorochemical 1 | 6.9 | 8 | 9 | 9 | 10 | 10 |
| 1% Lecithin | 6.4 | 9 | 9 | 9 | 10 | 10 |
| +0.5% Fluorochemical 1 and 1% Lecithin | 8.8 | 10 | 9 | 9 | 10 | 10 |

### Example 3

Coating compositions were prepared in a manner similar to Example 1 having the compositions shown in Table 3. Materials and painted MYLAR panels were prepared as described in Example 1 and Test Method 1. Tests were conducted according to Test Method 3 using the coating compositions and stains as described in Table 3.

The results are visually depicted in Fig. 3 and the numeral values shown below in Table 3. The values are a relative score of cleanability wherein 0 is uncleanable and 10 is completely cleanable.

**TABLE 3**

| Cleanability Ratings for Crayon Stain | | |
|---|---|---|
| Coating Base | Additive | Cleanability Rating |
| Paint #2 | None - Control | 1 |
| | 2% Lecithin | 7 |
| | 1% Lecithin and 0.2% Fluorochemical 1 | 8 |
| Paint #3 | None - Control | 1 |
| | 2% Lecithin | 9 |
| | 1% Lecithin and 0.2% Fluorochemical 1 | 7 |
| Paint #6 | None - Control | 1 |
| | 2% Lecithin and 0.2% Fluorochemical 1 | 5 |
| | 1% Lecithin and 0.2% Fluorochemical 1 | 4 |

### Example 4

Coating composition samples were prepared according to the methods used in Example 1 and Test Method 1. The coating bases used were Paint #2 or Paint #6 as listed in the Materials section. Control samples were prepared so as not to contain any additional additives. Experimental samples were prepared to the combination of both lecithin additive 1 and fluorochemical 1 as described in Table 4. Experimental samples and control samples coating compositions were applied to test panels according to Example 1 and Test Method 1.

Wash durability tests were performed according the Test Method 2 under the specifications of Table 4. The results are recorded below in Table 4 and visually depicted in Fig. 4. A higher number indicates better cleanability.

**Table 4 - Durability of Cleanability**

| Coating Base | Additive | 0 Cycles | 25 Cycles | 50 Cycles |
|---|---|---|---|---|
| Paint #2 | None - Control | 3.8 | 3.1 | 2.2 |
| Paint #2 | 1% Lecithin and 0.2% Fluorochemical 1 | 7.9 | 8.1 | 7.2 |
| Paint #6 | None - Control | 3.0 | 5.1 | 3.5 |
| Paint #6 | 1% Lecithin and 0.2% Fluorochemical 1 | 8.5 | 9.2 | 8.3 |

### Example 5

Coating composition samples were prepared according to the methods used in Example 1 and Test Method 1. The coating base used was Paint #2 as listed in the Materials section. Control samples were prepared so as not to contain any additional additives. Experimental samples were prepared to contain lecithin additive 1, fluorochemical 1, or the combination of both lecithin additive 1 and fluorochemical 1 as described in Table 4. Experimental sample and control sample coating compositions were applied to test panels according to the procedures in Example 1 and Test Method 1.

The contact angle test was performed according the Test Method 4. The results are recorded below in Table 5 and visually depicted in Fig. 5.

**Table 5 Contact Angle Measurement with Coating Base Paint #2**

| Coating Base Combined with These Additive(s) | Advancing Hexadecane Contact Angle |
|---|---|
| None - Control | 47.3 |
| 0.5% Fluorochemical 1 | 77.1 |
| 1.0% Lecithin | 61.6 |
| 0.2% Fluorochemical 1 and 1.0% Lecithin | 73.6 |

### Example 6

Coating composition samples were prepared according to the methods used in Example 1 and Test Method 3. The coating base used was Paint #4 as listed in the Materials section. Control samples were prepared so as not to contain any additional additives. Experimental samples were prepared to contain lecithin additive 1, fluorochemical 1, or the combination of both lecithin additive 1 and fluorochemical 1 as described in Table 4. Experimental sample and control sample coating compositions were applied to test panels according to the procedures in Example 1 and Test Method 3.

The contact angle test was performed according the Test Method 4. The results are recorded below in Table 6 and visually depicted in Fig. 6.

**Table 6 Contact Angle Measurement with Coating Base Paint #4**

| Coating Base Combined with These Additive(s) | Advancing Hexadecane Contact Angle |
|---|---|
| Control | 0 |
| 1% Lecithin | 0 |
| 0.5% Fluorochemical 1 | 67.1 |
| 1% Lecithin + 0.2% Fluorochemical 1 | 50.8 |

## Claims

1. A composition comprising a coating base, from 0.1 to 10.0% by weight of the composition of a lecithin additive, and an amount of a fluorochemical effective to provide, on drying of said composition, a fluorine concentration between 5 micrograms per gram and 10,000 micrograms per gram and an advancing hexadecane contact angle of at least 50 degrees

2. A composition according to claim 1, wherein the fluorochemical is a perfluoroalkyl ester, fluorinated urethane, fluorinated acrylic or methacrylic copolymer, fluorinated anionic surfactant, fluorinated sulfonamide, or fluorinated diol.

3. The composition according to claim 1 wherein the composition further comprises a titanium dioxide pigment.

4. The composition according to claim 1, wherein the coating base is selected from the group consisting of an alkyd coating, urethane coating, unsaturated polyester coating, a latex coating and a water dispersible coating.

5. The coating composition according to claim 1, wherein the lecithin additive is an acylated lecithin additive.

6. The composition of claim 1 after drying.

7. The composition of claim 6, wherein the composition provides improved cleanability by: a) at least 50% and/or b) by at least 1 point on a 0 to 10 point scale.

8. The composition of claim 1 after curing.

9. The composition of claim 8 wherein curing is conducted by air oxidation, a free radical mechanism, and/or radiation.

10. A method of coating a substrate wherein a composition of any claims 1-9 is applied to said substrate.

## Patentansprüche

1. Zusammensetzung, umfassend eine Beschichtungsbase, von 0,1 bis 10,0 Gew.-% der Zusammensetzung eines Lecithin-Zusatzmittels, und eine Menge einer Fluorchemikalie, die wirksam ist, um, beim Trocknen der Zusammensetzung, eine Fluor-Konzentration zwischen 5 Mikrogramm pro Gramm und 10000 Mikrogramm pro Gramm und einen fortschreitenden Hexadecan-Kontaktwinkel von mindestens 50 Grad bereitzustellen.

2. Zusammensetzung nach Anspruch 1, wobei die Fluorchemikalie ein Perfluoralkylester, ein fluoriertes Urethan, ein fluoriertes Acryl- oder Methacrylcopolymer, ein fluoriertes anionisches Tensid, ein fluoriertes Sulfonamid oder ein fluoriertes Diol ist.

3. Zusammensetzung nach Anspruch 1, wobei die Zusammensetzung ferner ein Titandioxid-Pigment umfasst.

4. Zusammensetzung nach Anspruch 1, wobei die Beschichtungsbase ausgewählt ist aus der Gruppe bestehend aus einer Alkydbeschichtung, einer Urethanbeschichtung, einer ungesättigten Polyesterbeschichtung, einer Latexbeschichtung und einer wasserdispergierbaren Beschichtung.

5. Zusammensetzung nach Anspruch 1, wobei das Lecithin-Zusatzmittel ein acyliertes Lecithin-Zusatzmittel ist.

6. Zusammensetzung nach Anspruch 1 nach dem Trocknen.

7. Zusammensetzung nach Anspruch 6, wobei die Zusammensetzung eine verbesserte Reinigungsfähigkeit von: a) mindestens 50% und/oder b) von mindestens 1 Punkt auf einer 0 bis 10 Punkteskala, bereitstellt.

8. Zusammensetzung nach Anspruch 1 nach dem Härten.

9. Zusammensetzung nach Anspruch 8, wobei das Härten durch Luftoxidation, einen freien Radikalmechanismus und/oder Bestrahlung durchgeführt wird.

10. Verfahren zum Beschichten eines Substrats, wobei die Zusammensetzung nach einem der Ansprüche 1 bis 9 auf das Substrat aufgetragen wird.

## Revendications

1. Composition comprenant une base de revêtement, de 0,1 à 10,0 % en poids de la composition d'un additif de lécithine, et une quantité d'une composition fluorée efficace pour fournir, lors du séchage de ladite composition, une concentration de fluor entre 5 microgrammes par gramme et 10.000 microgrammes par gramme et un angle de contact d'hexadécane avançant d'au moins 50 degrés.

2. Composition selon la revendication 1, dans laquelle la composition fluorée est un ester de perfluoroalkyle, un uréthane fluoré, un copolymère acrylique ou méthacrylique fluoré, un tensioactif anionique fluoré, un sulfonamide fluoré, ou un diol fluoré.

3. Composition selon la revendication 1, dans laquelle la composition comprend en outre un pigment dioxyde de titane.

4. Composition selon la revendication 1, dans laquelle la base de revêtement est sélectionnée dans le groupe constitué d'un revêtement alkyde, d'un revêtement d'uréthane, d'un revêtement de polyester insaturé, d'un revêtement de latex, et d'un revêtement dispersable dans l'eau.

5. Composition selon la revendication 1, dans lequel l'additif de lécithine est un additif de lécithine acylé.

6. Composition selon la revendication 1 après séchage.

7. Composition selon la revendication 6, la composition présentant une nettoyabilité améliorée: a) d'au moins 50% et/ou b) d'au moins un point sur une échelle de 0 à 10 points.

8. Composition selon la revendication 1 après durcissage.

9. Composition selon la revendication 8, dans laquelle le durcissage est effectué par oxydation de l'air, par un mécanisme à radicaux libres, et/ou par radiation.

10. Procédé de revêtement d'un substrat dans lequel une composition selon l'une quelconque des revendications 1 à 9 est appliquée audit substrat.
